# EUROPEAN PATENT APPLICATION

(11) **EP 3 023 184 A1**
(43) Date of publication of application: **25.05.2016**
(21) Application number: 14003903.3
(22) Date of filing: 20.11.2014
(51) Int. Cl.: B23D 57/00, B28D 5/04

(54) **Method and device for cutting workpieces**

(71) Applicant: Meyer Burger AG, 3645 GWATT (Thun) (CH)
(72) Inventor: Habegger, Simon, 3612 Steffisburg (CH)

(57) **Abstract**

Method for cutting a workpiece using a multi-wire saw and a multi-wire saw comprising at least two wire guide rollers for holding a wire portion (7) of a wire (4), preferably with fixed abrasives, the wire portion (7) held by the at least two wire guide rollers (2, 3) having a mounted wire length (L_{WEB}), first wire supply means (11) for supplying and retrieving a first end portion (15) of wire (4) to and from the wire guide rollers (2, 3) past a first entry point (E1) and second wire supply means (12) for supplying and retrieving a second end portion (16) of the wire (4) to and from the wire guide rollers (2, 3) past a second entry point (E2), capable of spooling off a renewal portion (17) of the wire portion (7) held by the wire guide rollers (2, 3) off the wire guide rollers (2, 3) past the first entry point (E1) and subsequently spooling more than 50%, preferably more than 90% of that renewal portion (17), called the refresh portion (18), back onto the wire guide rollers (2,3) past that first entry point (E1) and using the spooled back portion of the refresh portion (18), for cutting, the renewal portion (17) having a length (L_{R}, L'_{R}) of at least 20% of the mounted wire length (L_{WEB}), preferably having at least 30% of that length, even more preferably having at least 45% of that length such as about 50%.

## Description

### FIELD OF THE INVENTION

The invention refers to a wire saw and a cutting method for a wire saw.

This invention particularly relates to the fixed abrasive sawing technology. Nowadays, wafers for semiconductor application, solar cells or LEDs, are cut more and more using fixed abrasives. No longer are abrasives suspended in slurry that is transported by a metal wire to make a cut. The abrasives are directly attached to the metal wire. Such wire is called fixed abrasive wire (e.g. diamond wire).

These sawing technologies are used in the industry of semiconductors, electronic components, photovoltaics, optical components and photonics. Typical (brittle) materials sawn are GaAs, germanium, polycrystalline or monocrystalline or mono-like silicon, InP, quartzes, sapphire or other ceramic materials but also transition metals or rare earth metals.

The wire guide rolls of a wire saw are polyurethane coated having grooves on the wire receiving surface for guiding the cutting wire. The diamond wire is webbed over the wire guide rolls in those grooves. The pitch of the grooves (i.e. distance over which the groove pattern repeats itself) together with the wire diameter that is used, will determine the thickness of the sawn wafers.

The cost of the process of fixed abrasive wafering can be reduced considerably if the fixed abrasive wire can be continuously used in consecutive cuts even though part of the wire web was already used in a previous cut on condition that the remaining sawing capability of that used wire hasn't decreased too much. The sawing capability can be measured by the wire deflection (bow of the wire) in the process. Wire that has lost its sawing potential will deflect more (have a higher bow) than fresh, unused wire.

It is common to cut silicon with diamond wire by moving the cutting wire in two directions. The wire is moved back and forth just like with a normal hand saw. Usually the forward cut (wire moves from a supply spool to a receiving (or disposal) spool is slightly longer than in the opposite direction. This is the so-called pilgrim mode. The pilgrim mode leads to an intermittent addition of new, unused wire. This seems not surprising, but since for slurry cutting the wire normally only moves in one direction, pilgrim mode used not to be the usual way of cutting.

Before starting the cutting process the cutting wire is placed in the wire saw. Prior art document CH691292A5 shows in Fig. 1 a wire saw having a wire management system, the wire saw being ready to cut. In order to make the pilgrim motion, cutting wire is spooled off from a supply spool, runs thru the cutting area thereby forming a wire web, and is then spooled onto a receiving spool (disposal spool). Normally, the supplying spool, the receiving spool and the wire guide roller forming the wire web are driven.

The wire runs in one direction for e.g. 500-600 meters, i.e. 500-600 additional meters are spooled off the supply spool and onto the receiving spool as compared to the starting point, but only e.g. 490 to 590 meters are spooled back from the receiving spool to the supply spool. In this way new wire is fed to the wire web. Once a cutting wire portion no longer reaches the work piece to be cut (i.e. more cutting wire is fed in behind this portion so that when the wire moves back, it does not reach the work piece any more), the wire should be exhausted: the diamonds on the cutting wire a grinded down or have detached from the wire.

It was found that conventional wire saw suffer from loss in tension in the wire segments extending between the wire guide rollers. Due to the friction between the wire and the wire guide rollers these differences cannot even out. The tension in the wire makes the wire segments elongated during cutting, leading to reduced tension. This is particularly bad because the wire now can more easily move sideways (axial direction of the wire guide rollers), leading to undesired quality of the wafers.

Since in modern cutting methods the wire is moved back and forth without leaving the wire web and, as previously mentioned, tension differences cannot equal out due to friction between the wire (with fixed abrasives) and the grooves of the wire guide rollers, wire portions with low tension will persist in the wire web (part of the wire held by the wire guide rollers used for cutting) leading to a decrease in quality of the cut workpieces.

The multiple overlapping windings of the cutting wire on the supply spool and the receiving spool cause damages to the wire. The friction arising between the uppermost wire portion leaving the spool or arriving at the spool and the wire portions arranged below reduces life time of the wire and thus increases costs. Friction arises when the wire is spooled over itself.

From JP03074007B2 wire guide rollers are known with a conical leading and trailing portion. The wire held by the wire guide rollers is thus brought to a higher tension than in the leading and trailing part, presumably leading to better cutting quality.

Since this additional wire tensioning is static it cannot adjust for unexpected elongation as e.g. due to inclusions in the work piece.

From EP 1685934 A1 a similar approach is known where the diameter of the wire guide roller increases in the direction toward the spool used to dispose the wire, suffering from the same drawback: it is static and it is questionable if tension can be maintained accurately this way.

In addition the shown systems have the following drawback:

It is hard to reach the complete wire held by the wire guide rollers e.g. for cleaning, trueing (adjusting diameter of wire) or dressing (treatment of the abrasive particles on the wire). Even if the wire is accessible, the tool for cleaning has to be brought to the different portions of the wire portion held by the wire guide roller. Making it much harder to control the actions of the tool and making the latter more expensive.

It is the goal of this invention to provide a cutting method and a wire saw that takes away these disadvantages.

### SUMMARY OF THE INVENTION

These goals are achieved by a cutting method according to the features of claim 1 and a wire saw according to the features of claim 10.

Since the complete wire portion held by the wire guide roller can be removed from the wire guide roller (wire portions extending between them always included), a tool for manipulating the wire can be stationary.

With wire being held by the wire guide rollers, it is meant that the wire extends around the wire guide rollers in a spiralling manner as is usual when cutting workpieces. The wire may spiral around all wire guide rollers or portions of the wire may only spiral around a sub set of the wire guide rollers present, as is known from the state of the art.

The inventive method is especially suited for cutting wire with fixed abrasives, since such wire is moved back and forth during cutting, thus "trapping" tension differences in the wire web (part of the wire held by the wire guide rollers used for cutting work pieces).

In this document "wire (portion) held by the wire guide rollers" or "wire (portion) on the wire guide rollers" means all wire that touches the wire guide rollers (during normal usage) and the wire portions extending between them.

The first and second entry points are the transitions between the wire portion held by the at least two wire guide rollers and respectively the first end portion and the second end portion.

Wire saw with e.g. 2, 3, or even more wire guide rollers are known in the state of the art.

Also removing the wire portion held by the wire guide rollers makes it possible to adjust its tension (using normal tensioning means as known for wire saws such as dancers, pulleys, rotational speed of spools or any combination thereof). Once the tension has been brought back to the desired level, the wire spooled onto the wire guide rollers again and the wire web is ready for used again.

Preferably the renewal portion has a length of at least 80% of the mounted wire length, preferably having essentially 100% of that length, so that the storage spools (see figure description) do not need to be empty before equalizing the tension.

Preferably the renewal portion has a length of at least 0.5 km, preferably of at least 1 km even more preferably at least 2 km.

In order to keep the amount of wire held by the wire guide rollers constant (ignoring elongation of the wires) while spooling the renewal portion of the wire portion held by the wire guide rollers, a second refresh portion must be spooled onto the wire guide rollers past the second entry point.

The wire spooled of the wire guide rollers may very well be re-used for further cutting, the goal only being to equalize the tension in the wire or the treat the wire held by wire guide rollers (also called wire on the wire guide rollers) and therefore the renewal portion may be, at least partially, say more than 50%, preferably more than 80%, spooled back onto the wire guide rollers past the first entry point. A wire portion with exactly the same length may be spooled on as was spooled off, the refresh portion may have a length that is less than 5% different (meaning longer or shorter) from the renewal portion, preferably having a length that is less than 2% different from the renewal portion, even more preferably having a length that is less than 1% different from the renewal portion such as the lengths being essentially equal.

When refreshing the wire held by the wire guide rollers during cutting it is preferred that the renewal portion is spooled off the wire guide rollers at a first speed and spooling a refresh portion onto the wire guide rollers with a second speed, the first and second speeds respectively having an absolute value that is less than 5% different (meaning smaller or larger), preferably less than 1% different, even more preferably less than 0.5% different such as being essentially equal. In this way the speed of the wire can be kept near its optimum for a good cutting quality both during removing the renewal portion as during spooling on the refresh portion.

Preferably the spooling off of the renewal portion and/or spooling on of the refresh portion is respectively done without changing the direction of movement of the wire over at least 25% its length, preferably over at least 50% of its length even more preferably essentially 100% of its length so that the wire does not have to be accelerated and decelerated, thus making it possible to keep its speed in a desired range, e.g. for cutting or for rapid wire refreshment.

As used in this document "A and/or B" means only option A (no B), only option B (no A) or A and B simultaneously.

Preferably the spooling off of the renewal portion and/or spooling on of the refresh portion is respectively done without changing the speed of the wire portion by more than 50%, preferably without changing the speed of the wire portion by more than 25%, even more preferably without changing the speed of the wire portion by more than 5%, over at least 50% of its length, so that the average speed of the wire is kept high and in the desired range as long as possible.

Preferably the renewal portion is spooled off and/or the refresh portion is spooled onto the wire guide rollers when the workpiece is pressed against the wire web, preferably with a force greater than 0.5kN, even more preferably greater than 1 kN even more preferably greater than 2kN, so that no time is lost for equalizing the tension in the wire and/or the wire can be treated during cutting, all leading to better cutting quality.

If the wire portion held by the wire guide rollers can be removed from the wire guide rollers fast enough, spooling off the renewal portion and/or spooling on the refresh portion may be done when no workpieces are cut, preferably when workpieces are being loaded or unloaded, thus also preventing down-time of the wire saw.

Preferably the spooling off of renewal portions and subsequently spooling on of refresh portions of one wire is repeated multiple times, preferably at least 5 times, more preferably at least 20 times even more preferably at least 50 times so that the tension in the wire web is maintained as equal as possible and/or the wire can be treated constantly. More over the spooling off of renewal portions and subsequently spooling on of refresh portions is repeated without changing the wire in the system.

In order to add new wire to the wire web (part of the wire portion held by the wire guide rollers that is used for cutting), after having removed the renewal portion of the wire held by the wire guide rollers , a refresh portion may be spooled onto the wire guide rollers having a length that is more than 1% different meaning smaller or larger) from the renewal portion, preferably having a length that is more than 2% different from the renewal portion, even more preferably having a length that is more than 5% different from the renewal portion, depending on the desired renewal rate. The refresh portion may contain new wire (has not been used for cutting before), newer wire (has not been cut with as much as the wire that was spooled off), at least partially the same wire as previously held by the wire guide rollers or any combination thereof.

Preferably the wire is held by the first and/or second supply means in windings that do not overlap each other and/or having a lower density of windings than on a supply spool. In this document "density of wire windings" meaning the number of wire windings per unit length along the axis of the spool. With "wire held by a spool" all wire on that spool is meant. The wire may also be held by multiple spools, much as with wire guide rollers. In that case the wire held is also the wire extending between the spools, like with the wire guide rollers.

Alternatively the first and/or second supply means may comprise a spool for holding windings in overlapping manner.

In a further aspect of the invention a multi-wire saw is provided comprising at least two wire guide rollers for holding a wire portion of a wire, preferably with fixed abrasives, the wire portion held by the at least two wire guide rollers having a mounted wire length, first wire supply means for supplying and retrieving a first end portion of wire to and from the wire guide rollers past a first entry point and second wire supply means for supplying and retrieving a second end portion of the wire to and from the wire guide rollers past a second entry point, the first and/or second wire supply means being laid out for holding at least 20% of the wire portion held by the at least two wire guide rollers, preferably at least 30% thereof, even more preferably at least 45% thereof such as about 50%. Such a wire saw is especially suited for executing the inventive methods.

The wire saw may comprise a controller, at least functionally connected to drives for the wire guide rollers, for carrying out the inventive method. The controller normally also being connected to other parts of the wire saw such as the feed table, cutting fluid supply etc.

Preferably the first and/or second wire supply means are laid out for holding at least 80% of the wire portion held by the at least two wire guide rollers, preferably at least 100% thereof, even more preferably at least 125% thereof so that the wire portion held by the at least two wire guide rollers can be completely from the wire guide rollers more easily. Typically the first and/or second wire supply means may be laid out for holding at least 2 km wire, preferably at least 4km, even more preferably at least 10km, while the wire portion held by the at least two wire guide rollers may have a length of at least 4km, preferably 8 km even more preferably at least 20km.

Preferably the first and/or second wire supply means are laid out for holding wire in windings that do not overlap or touch each other and/or with a lower density of windings than on a supply spool so that the fixed abrasives are not damaged when held. The first and/or second wire supply means preferably containing a spool for holding wire in windings that do not overlap each other or touch each other and/or with a lower density of windings than on a supply spool.

Alternatively the first and/or second supply means may comprise a spool for holding windings in overlapping manner, preferably means being provided for alternating the tension in the wire so that wire is held by the first and/or second supply means with lower tension than the tension in the wire when held on the wire guide rollers.

Preferably both first and second wire supply means are laid out for holding essentially equal amounts of wire, preferably at least 50% of the wire portion held by the at least two wire guide rollers, so that the dimensions of the first and second wire supply means can be kept small.

### BRIEF DESCRIPTION OF THE DRAWINGS

For a better understanding of the nature of the present invention, reference should be made in the detailed description taken in conjunction with the accompanying drawings in which:
- FIG. 1: shows parts of a wire saw essential for the current invention.
- FIG. 2: schematically shows the wire held by the different parts of the wire saw.
- FIG. 3a and 3b: show different recipes for refreshing the web according to the invention.
- FIG. 3c: shows a recipe for refreshing and renewing the web according to the invention.
- FIG. 4a and 4b: show different the position of the wire according to the methods shown in figures 3a and 3b
- FIG. 5: show wire saw with wire supply means that can hold wire in non-overlapping windings.

### DETAILED DESCRIPTION OF THE INVENTION

The present invention will be described with reference to exemplary embodiments and the present invention is not limited to particular interconnectors, devices, use or methods, except as defined in the appended claims. Embodiments of the present invention may be used with a variety of methods and systems. It will be apparent to one skilled in the art that the present invention may be practiced in a variety of ways within the scope of the claims. All features shown in relation to the figures may be applied mutatis mutandis to the invention as described in the claims and the claim description.

As used herein, the indefinite article ("a", "an") denotes the presence of at least one of the referenced item, and the term 'a plurality' or 'multiple' denotes the presence of more than one.

In the figures only parts essential for the current invention are shown schematically, for better understanding the invention.

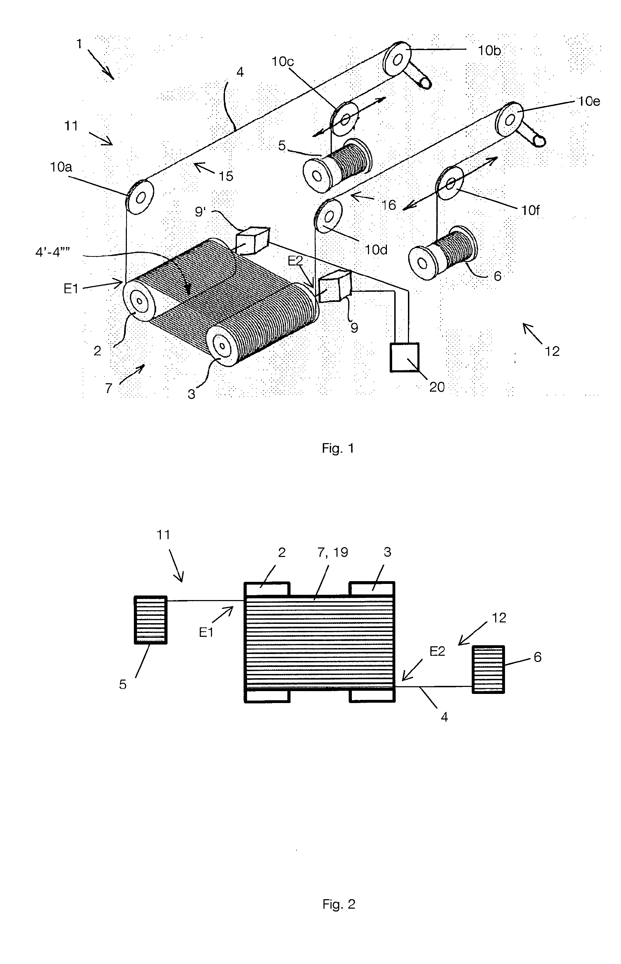

Figure 1 shows parts of a wire saw 1 essential for explaining the current invention. Such wire saws are known from the state of the art and are for example used for cutting materials such as silicon, Quartz, sapphire, transition metals and rare earth metals.

The wire saw 1 is shown to have two wire guide roller 2, 3 that are respectively driven by drives 9 and 9'. A wire 4 extends from a supply spool 5 to a supply spool 6 and runs over intermediate pulleys 10a-d and wire guide rollers 2, 3.

Supply spool 5 and intermediate pulleys 10a-1 c are here part of first wire supply means 11 for supplying first wire end portion 15 to and retrieving it from the wire guide rollers 2, 3.

Supply spool 6 and intermediate pulleys 10d-1f are here part of second wire supply means 12 for supplying a second end portion 16 to and retrieving it from the wire guide roller 2, 3.

Wire supply means being essentially all needed to supply wire to and retrieve wire from the wire guide rollers 2, 3. Since wire always has to be supplied to (e.g. end portion 15) and retrieved from (in that case end portion 16) the wire guide rollers at the same time, two wire supply means 11, 12 are necessary. Theoretically components of the wire supply means 11, 12 could be combined (as for example is known from US 4,484,502), but still the function of first and second supply means is needed.

During sawing wire 4 is normally moved both in the direction from supply spool 5 to supply spool 6 and vice versa.

As indicated by 7, part of the wire is held by the wire guide rollers. In this document "wire held by the wire guide rollers) means all wire that touches the wire guide rollers or extends between them. Arrow E1 indicates the location where wire 4 is no longer held by the wire guide rollers 2, 3. The wire portion extending from this point E1 to supply spool 5 is not held by the wire guide roller. The wire portion extending from point E2 to supply spool 6 is also not held by the wire guide roller. Except for these two portions, all wire 4 is held by the wire guide rollers.

During cutting a workpiece is mounted to a feed table and pressed against wire portions 4'-4"". The feed table and workpiece and all related to it are not shown in figure 1 for clarity and are well known from the state of the art.

As shown in figure 1 the drives 9, 9' for the wire guide rollers are functionally connected to a controller 20, the controller being configured to carry out the inventive method, the controller normally also being functionally connected to the feed table for workpieces that is not shown here.

Figure 2 schematically shows the wire guide rollers 2, 3 from above and the wire portion 7 held by them. The length of the wire portion held by the wire guide roller is indicated by L_{WEB}. The rest of the wire is either held by the first wire supply means 11 left of point E1, indicated by L_{LEFT} or the second wire supply means 12 right of point E2, indicated by L_{RIGHT}. The upper part of the wire held by the wire guide rollers forms the wire web 19.

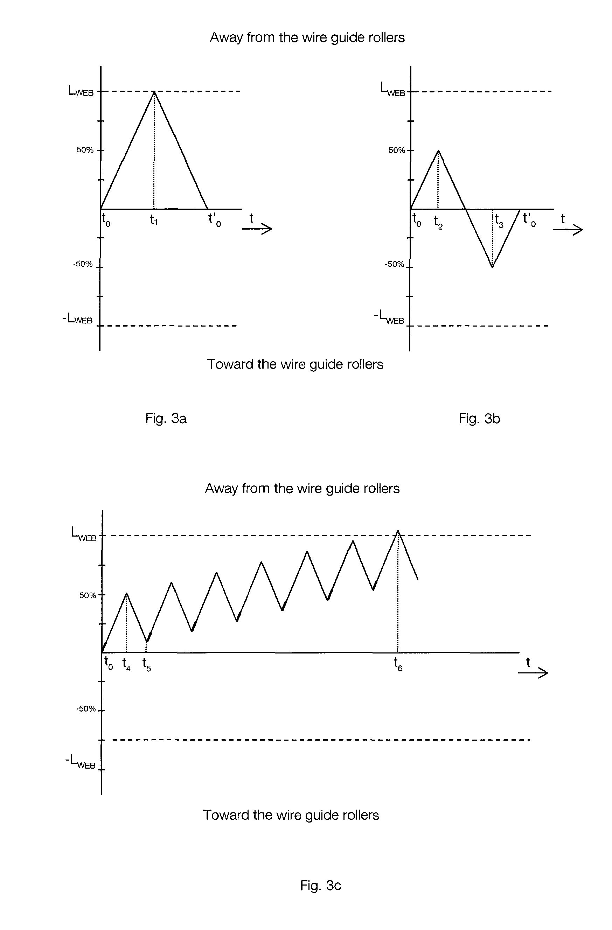

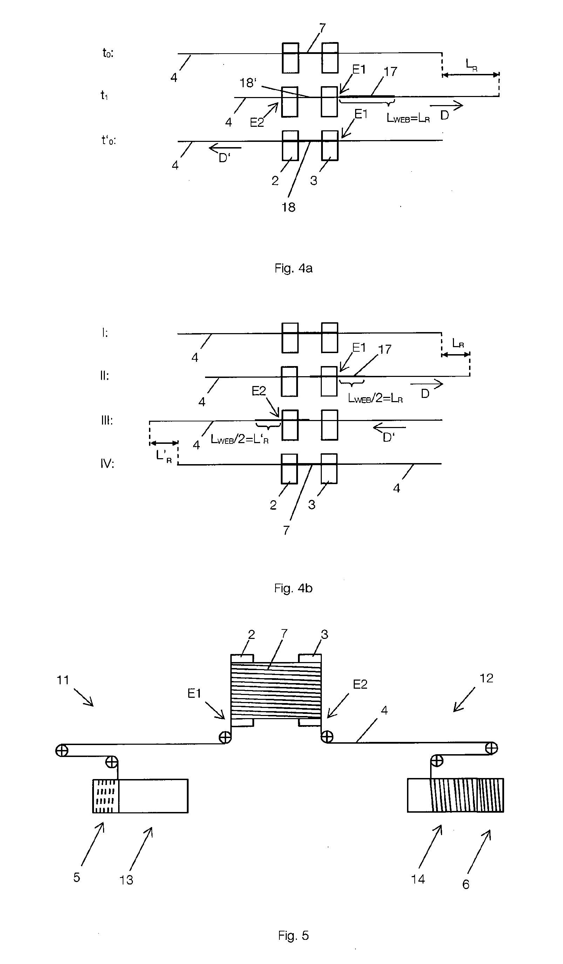

Figures 3a-3c schematically show the amount for wire that has moved past first entry point E1 toward first wire supply means 11 here a supply spool 5. The positive y-axis indicating the amount of wire having moved away from the wire guide rollers and the negative y-axis indicating the amount of wire having moved toward the wire guide rollers. The x-axis is a time scale in arbitrary units starting at t=0 at which point a given amount of wire L_{WEB} is held on the wire guide rollers 2, 3, e.g. as shown in figure 1. Figures 4a and 4b respectively show the position of the wire 4 relative to the wire guide rollers 2, 3. For clarity the wire does not coil around the wire guide rollers and is not held by supply spools. In this way the dimensions of the wire and its portions can be seen.

In figures 3a and 4a, the complete wire portion 7 held by the wire guide rollers 2, 3 with length L_{WEB} is spooled off the wire guide rollers 2, 3 past first entry point E1 by moving wire 4 in direction D (thus pulling second refresh portion 18' onto the wire guide rollers. This has been completed at t₁. The renewal portion 17 has length L_{R} equal to length L_{WEB}. Note that necessarily a refresh portion 18 of length L_{WEB} is spooled onto the wire guide rollers 2, 3 past entry point E2.

Starting at t₁, the wire 4 is moved in opposite direction (D'). After having moved the wire over length L_{WEB} in this opposite direction (D'), the portion 7 of the wire that was initially (at t₀) held by the wire guide rollers 2, 3 is again on the wire guide rollers 2, 3, but now (at t'₀) with equalized tension. At t'₀ the situation as at time t₀ has been re-established and the wire held by the wire guide rollers has been refreshed.

Note that refreshed only means that the complete wire portion 7 held by the wire guide rollers 2, 3 has been moved off the wire guide rollers 2, 3 and another portion now is held by the wire guide rollers 2, 3. Essentially at t1 the complete wire portion held by the wire guide rollers has been refreshed. Spooling the wire portion that was removed past entry point E1 back onto the wire guide rollers (again past entry point E1) will result in the same wire portion being held by the wire guide rollers as at t=0, but now being refreshed, meaning that the tension in the wire portion has been equalized.

Refreshing a wire portion in this document means that a wire portion (used, new or any combination thereof) is removed from the wire guide rollers and again spooled onto them so that the tension in the wire portion held by the wire guide rollers has been equalized.

Clearly for the method shown in figure 3a, first wire supply means 11 must be capable of temporarily holding the complete length L_{WEB}. Conventional wire saw do this by spooling that amount onto a supply spool 5. The great disadvantage being that wire is wound on top of each other damaging the wire significantly. A solution for this problem is known from WO2014087340A2 "Wire management system" where a storage spool is used to temporarily hold a wire portion so that the windings do not overlap each other and/or with a lower density of windings ("density of wire windings" meaning the number of wire windings per unit length along the axis of the spool) than the windings on the supply spool (in WO' 340 called reservoir spool).

In order to reduce the dimensions of the first and second wire supply means, the method may be carried out according to figures 3b and 4b.

Here in a first phase 50% of the wire held by the wire guide rollers at t₀ is spooled of the wire guide rollers 2, 3 past entry point E1 and e.g. temporarily held by a storage spool that now only needs to be able to hold 50% of L_{WEB}. Once the 50% has been spooled off the wire guide rollers at t=t₂, the same amount is spooled back onto the wire guide rollers past entry point E1, now 50% of the wire held by the wire guide rollers has been refreshed.

The same is now repeated but in the other direction: in a second phase first 50% of L_{WEB} wire is spooled from first wire supply means onto the wire guide rollers past entry point E1 (at the same time second wire supply means take up the same amount of wire passing entry point E2, as will be explained later). At t₃ this has been done and the wire guide rollers only hold refreshed wire (refreshed in the first or in the second phase, all wire coming from the first wire supply means). Spooling the wire back from the second wire supply means (passing entry point E2) onto the wire guide rollers 2, 3 ensures that still only refreshed wire is held on the wire guide rollers, thus achieving the goal of the invention. Again beneficially this method is carried out with the wire saw as described in WO'340, the first and second storage spool being empty before starting.

Figure 3c shows an iterative way of refreshing the wire portion 7 held by the wire guide rollers, again especially suited for a wire saw as described in the WO'340. The method will be described in relation to figure 4.

First a small portion (bold line segment starting at t₀ in figure 3c) of the wire is moved off the wire guide rollers 2, 3 and spooled onto Supply spool 5 e.g. to be discarded (this step is shown in figure 5, the remaining steps are not shown in relation to the wire saw of figure 5. See WO'340 for a more complete description). The rest of the wire (thin line up to t₄) is spooled onto first storage spool 13. Now the wire portion held by first storage spool 13 is spooled back onto the wire guide rollers (thin line between t₄ and t₅). Since less wire is spooled back onto the wire guide rollers than was taken off (leaving on wire supplied by second wire supply means 12 past entry point E2), the complete wire portion held by the wire guide rollers can be refreshed by repeating the above. This happens at t₆ when the total amount of wire spooled away from the wire guide rollers is larger than L_{WEB}. Since in each iteration a lot of wire is removed from the wire guide rollers 2, 3 (about 50% in figure 4), the tension in the web is equalized at least for these 50%. Since new wire (say about 10% because identical to the amount that is discarded per iteration (bold line)) is added to the wire guide rollers from second supply means 12, refreshed wire is spooled onto the wire guide rollers from that side as well.

The wire spooled onto the wire guide rollers may be completely new (has not been used for cutting before), it may be not as worn (has not been cut with as much as the wire that was previously (e.g. at t=0) held by the wire guide rollers, it may be at least partially the same wire previously (e.g. at t=0) held by the wire guide rollers or any combination thereof.

### List of reference marks

| | | | |
|---|---|---|---|
| 1 | Wire saw | | |

| | | | |
|---|---|---|---|
| 2 | Wire guide roller | 14 | Second storage spool |
| 3 | Wire guide roller | 15 | First end portion |
| 4 | Wire | 16 | Second end portion |
| 4'-4"" | Wire segments | 17 | Renewal portion |
| 5 | Supply spool for wire | 18 | Refresh portion |
| 6 | Supply spool for wire | 18' | Second refresh portion |
| 7 | Wire portion held by wire guide rollers | 19 | Wire web |
| 9, 9' | Drives for wire guide rollers | 20 | Controller |
| 10a-f | Intermediate pulleys | | |
| 11 | First wire supply means | D, D' | Direction of movement of the wire |
| 12 | Second wire supply means | E1 | First entry point |
| 13 | First storage spool | E2 | Second entry point |
| | | L_{R}, L'_{R} | Length of renewal portion |
| | | v1, v2 | Speed of the wire |

## Claims

1. Method for cutting a workpiece using a multi-wire saw comprising at least two wire guide rollers for holding a wire portion (7) of a wire (4), preferably with fixed abrasives, the wire portion (7) held by the at least two wire guide rollers (2, 3) having a mounted wire length (L_{WEB}), first wire supply means (11) for supplying and retrieving a first end portion (15) of wire (4) to and from the wire guide rollers (2, 3) past a first entry point (E1), second wire supply means (12) for supplying and retrieving a second end portion (16) of the wire (4) to and from the wire guide rollers (2, 3) past a second entry point (E2), the method comprising the steps of spooling a renewal portion (17) of the wire portion (7) held by the wire guide rollers (2, 3) off the wire guide rollers (2, 3) past the first entry point (E1) and subsequently spooling more than 50%, preferably more than 90% of that renewal portion (17), called the refresh portion (18), back onto the wire guide rollers (2,3) past that first entry point (E1) and using the spooled back portion of the refresh portion (18) for cutting, the renewal portion (17) having a length (L_{R}, L'_{R}) of at least 20% of the mounted wire length (L_{WEB}), preferably having at least 30% of that length, even more preferably having at least 45% of that length such as about 50%.

2. Method according to claim 1, **characterized in** the renewal portion (17) having a length (L_{R}, L'_{R}) of at least 0.5 km, preferably of at least 1 km even more preferably at least 2 km.

3. Method according to any of the previous claims, **characterized in that** the refresh portion (18) has a length that is less than 5% different from the renewal portion (17), preferably having a length that is less than 2% different from the renewal portion, even more preferably having a length that is less than 1 % different from the renewal portion such as the lengths being essentially equal.

4. Method according to any of the previous claims, **characterized in** the renewal portion (17) being spooled off the wire guide rollers (2, 3) at a first speed and spooling a refresh portion (18) onto the wire guide rollers (2, 3) with a second speed, the first and second speeds having respectively an absolute value that is less than 5% different, preferably less than 1 % different, even more preferably less than 0.5% different such as being essentially equal.

5. Method according to any of the previous claims, **characterized in that** the spooling off of the renewal portion (17) and/or spooling on of the refresh portion (18) is respectively done without changing the direction of movement (D) of the wire (4) over at least 25% its length, preferably over at least 50% of its length even more preferably essentially 100% of its length.

6. Method according to any of the previous claims, **characterized in** spooling off of the renewal portion (17) and/or spooling on of the refresh portion (18) when the workpiece is pressed against the wire web (19), preferably with a force greater than 0.5 kN, even more preferably greater than 1 kN even more preferably greater than 2 kN.

7. Method according to any of the previous claims, **characterized in** spooling off the renewal portion (17) and/or spooling on the refresh portion (18) when no workpieces are cut, preferably when workpieces are being loaded or unloaded.

8. Method according to any of the previous claims, **characterized in** continuously repeating spooling off a renewal portion (17) and subsequently spooling on a refresh portion (18) multiple times of one wire (4), preferably at least 5 times, more preferably at least 20 time even more preferably at least 50 times.

9. Method according to any of the previous claims, **characterized in** after having removed the renewal portion (17) of the wire (7) held by the wire guide rollers (2, 3), spooling a refresh portion (18) onto the wire guide rollers (2, 3) having a length that is more than 1% different from the renewal portion (17), preferably having a length that is more than 2% different from the renewal portion (17),even more preferably having a length that is more than 5% different from the renewal portion (17).

10. Method according to any of the previous claims, **characterized in** the refresh portion containing new wire newer wire, at least partially the same wire (7) as previously held by the wire guide rollers (2, 3) or any combination thereof.

11. Multi-wire saw comprising at least two wire guide rollers for holding a wire portion (7) of a wire (4), preferably with fixed abrasives, the wire portion (7) held by the at least two wire guide rollers (2, 3) having a mounted wire length (L_{WEB}), first wire supply means (11) for supplying and retrieving a first end portion (15) of wire (4) to and from the wire guide rollers (2, 3) past a first entry point (E1) and second wire supply means (12) for supplying and retrieving a second end portion (16) of the wire (4) to and from the wire guide rollers (2, 3) past a second entry point (E2), the first and/or second wire supply means being laid out for holding at least 20% of the wire portion (7) held by the at least two wire guide rollers (2, 3), preferably at least 30% thereof, even more preferably at least 45% thereof such as about 50%.

12. Multi-wire saw according to claim 11, **characterized in that** the first and/or second wire supply means (11, 12) being laid out for holding wire (4) in windings that do not overlap each other or touch each other and/or with a lower density of windings than on a supply spool (5,6), the first and/or second wire supply means (11, 12) preferably containing a spool for holding wire (4) in windings that do not overlap each other or touch each other and/or with a lower density of windings than on a supply spool (5,6).

13. Multi-wire saw according to claim 11 or 12, characterized that the first and/or second wire supply means (11, 12) are laid out for holding at least 80% of the wire portion (7) held by the at least two wire guide rollers (2, 3), preferably at least 100% thereof, even more preferably at least 125% thereof.

14. Multi-wire saw according to claim 11 or 13, **characterized in that** the first and/or second wire supply means are laid out for holding at least 0.5 km wire, preferably at least 1 km, even more preferably at least 2km.

15. Multi-wire saw according to claim 11 or 14, **characterized in that** the wire portion (7) held by the at least two wire guide rollers (2, 3) having a length of at least 0.5km, preferably of at least 1 km even more preferably at least 2 km.
